(19) Europäisches Patentamt
European Patent Office
Office européen des brevets

(11) **EP 2 331 605 B1**

(12) **EUROPEAN PATENT SPECIFICATION**

(45) Date of publication and mention
of the grant of the patent:
**10.12.2014 Bulletin 2014/50**

(21) Application number: **09752505.9**

(22) Date of filing: **08.09.2009**

(51) Int Cl.:
**C08G 63/183** (2006.01)

(86) International application number:
**PCT/US2009/005044**

(87) International publication number:
**WO 2010/033161 (25.03.2010 Gazette 2010/12)**

(54) **POLYESTER MELT-PHASE COMPOSITIONS HAVING IMPROVED THERMO-OXIDATIVE STABILITY, AND METHODS OF MAKING AND USING THEM**

POLYESTER-SCHMELZEPHASEN-ZUSAMMENSETZUNGEN MIT VERBESSERTER THERMOOXIDATIVER STABILITÄT UND VERFAHREN ZU IHRER HERSTELLUNG UND VERWENDUNG

COMPOSITIONS DE POLYESTER EN PHASE FONDUE AYANT UNE STABILITÉ THERMO-OXYDANTE AMÉLIORÉE, ET PROCÉDÉS ASSOCIÉS DE FABRICATION ET D UTILISATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.09.2008 US 98060 P**

(43) Date of publication of application:
**15.06.2011 Bulletin 2011/24**

(73) Proprietor: **GRUPO PETROTEMEX, S.A. DE C.V.**
**San Pedro Garza Garcia, Nuevo Leon 66265 (MX)**

(72) Inventors:
• **JENKINS, Jason, Christopher**
  **Kingsport**
  **TN 37663 (US)**
• **BRICKEY, Dennis, Edward**
  **Blountville**
  **TN 37617 (US)**
• **HOWELL, Earl, Edmondson, Jr.**
  **Kingsport**
  **TN 37660 (US)**
• **GREENE, Carol, Juilliard**
  **Kingsport**
  **TN 376608502 (US)**

(74) Representative: **Tostmann, Holger Carl et al**
**Wallinger Ricker Schlotter Tostmann**
**Patent- und Rechtsanwälte**
**Zweibrückenstrasse 5-7**
**80331 München (DE)**

(56) References cited:
**WO-A-2009/094102       US-A1- 2008 027 206**
**US-A1- 2008 161 529**

**Description**

CROSS-REFERENCE TO RELATED APPLICATIONS

This application claims priority to U.S. Provisional Application Serial No. 61/098,060, filed September 18, 2008 the disclosure of which is incorporated herein by reference in its entirety.

FIELD OF THE INVENTION

The invention relates to polyester compositions, and more specifically, to polyester compositions that include a melt-phase polyethylene terephthalate polyester having incorporated therein residues of a monomer having two or more fused aromatic rings.

BACKGROUND OF THE INVENTION

Certain polyester compositions, suitable for molding, are useful in packaging, such as in the manufacture of beverage containers. For example, some poly(ethylene terephthalate) polymers ("PET") are useful for that purpose, and PET has become popular because of its lightness, transparency and chemical inertness.

PET is normally produced in a two-stage process, beginning with a melt-phase stage followed by a solid stating stage. The melt-phase stage is typically a three-phase process. First, in the esterification stage, ethylene glycol is reacted with terephthalic acid in a slurry under positive pressure and a temperature of 250-280°C yielding oligomeric PET. Next, the oligomer is heated to a slightly higher temperature, usually 260-290°C, and the positive pressure is changed to a mild vacuum, usually 20-100 mm, to yield the prepolymer. Finally, the prepolymer is converted to the final polymer by continuing to reduce the pressure to 0.5-3.0 mm and sometimes raising the temperature. After the three-phase melt process is complete, typically pellets at the end of the polymer stage are increased in molecular weight by a solid state process. Typically, both the melt-phase and solid state process stages are conducted in the presence of an antimony catalyst.

Antimony can be problematic, however. When it is used as a polycondensation catalyst for polyester and the polyester is molded into a bottle, for example, the bottle is generally hazy and often has a dark appearance from the antimony catalyst that is reduced to antimony metal.

Disadvantages with the use of antimony, as well as other factors, have led to the development of an antimony-free melt-phase only process. However, the oxidative stability of PET prepared by such a method may be reduced and may result in a breakdown in molecular weight when the PET is exposed to air at temperatures around or exceeding 165°C. This is a problem because PET must be dried before it is processed, and the drying of PET is generally carried out above 165°C.

Thus, there remains a need in the art for PET that can be produced by a melt-phase only process and that possesses higher oxidative stability. Increased stability may allow drying at higher temperatures. Additionally, it may eliminate the need to produce higher molecular weight PET to compensate for subsequent molecular weight breakdown.

SUMMARY OF THE INVENTION

In one aspect, the invention relates to polyester compositions that include a melt-phase polyethylene terephthalate polyester having incorporated therein residues of a monomer having two or more fused aromatic rings, in an amount from about 0.1mole% to about 10 mole%, based on a total amount of dicarboxylic acid residues in the melt-phase polyethylene terephthalate polyester comprising 100 mole%; and that also include aluminum, and optionally an alkali metal or an alkaline earth metal.

In another aspect, the invention relates to polyester compositions that include a melt-phase polyethylene terephthalate polyester having incorporated therein residues of 2,6-naphthalenedicarboxylic acid, in an amount from about 0.1 mole% to about 3 mole%, based on a total amount of dicarboxylic acid residues in the melt-phase polyethylene terephthalate polyester comprising 100 mole%; aluminum present in an amount from about 3 ppm to about 100 ppm aluminum atoms, based on the total weight of the polyester composition; and lithium present in an amount from about 4 ppm to about 250 ppm lithium atoms, based on the total weight of the polyester composition.

In yet another aspect, the invention relates to articles that include a melt-phase polyethylene terephthalate polyester having incorporated therein residues of 2,6-naphthalenedicarboxylic acid, in an amount from about 0.1 mole% to about 3 mole%, based on a total amount of dicarboxylic acid residues in the melt-phase polyethylene terephthalate polyester comprising 100 mole%; aluminum present in an amount from about 3 ppm to about 100 ppm aluminum atoms, based on the total weight of the article; and lithium present in an amount from about 4 ppm to about 250 ppm lithium atoms, based on the total weight of the article.

In a further aspect, the invention relates to processes for making melt-phase polyethylene terephthalate polyesters, that include the steps of forming a mixture comprising ethylene glycol, at least one acid chosen from terephthalic acid and derivatives of terephthalic acid, and a monomer having two or more fused aromatic rings, wherein the monomer having two or more fused aromatic rings is present in an amount from about 0.1 mole% to about 3 mole%, based on a total amount of dicarboxylic acid residues in the mixture comprising 100 mole%; and reacting the mixture in the presence of aluminum, and optionally an alkali metal or an alkaline earth metal, to obtain the melt-phase polyethylene terephthalate polyester.

Further aspects of the invention are as disclosed and claimed herein.

DETAILED DESCRIPTION OF THE INVENTION

The present invention may be understood more readily by reference to the following detailed description of the invention, including the appended figures, and to the examples provided. It is to be understood that this invention is not limited to the specific processes and conditions described in the examples, because specific processes and process conditions for processing plastic articles may vary. It is also to be understood that the terminology used is for the purpose of describing particular embodiments only and is not intended to be limiting.

As used in the specification and the claims, the singular forms "a," "an," and "the" include plural referents unless the context clearly dictates otherwise. For example, reference to a "preform," "container" or "bottle" or an "article" is intended to include a plurality of preforms, containers, bottles, or articles.

By "comprising" or "containing" we mean that at least the named compound, element, particle, etc. must be present in the composition or article, but does not exclude the presence of other compounds, materials, particles, etc., even if the other such compounds, material, particles, etc. have the same function as what is named.

It is also to be understood that the mention of one or more process steps does not preclude the presence of additional process steps before, after, or intervening between those steps expressly identified, unless such a process step is expressly excluded by the claim.

Expressing a range includes all integers and fractions thereof within the range. Expressing a temperature or a temperature range in a process, or of a reaction mixture, or of a melt or applied to a melt, or of a polymer or applied polymer means in all cases that the reaction conditions are set to the specified temperature or any temperature, continuous or intermittently, within the range; and that the reaction mixture, melt, or polymer are subjected to the specific temperature.

By "atoms" as used in conjunction with a metal we mean the metal atom occupying any oxidation state, any morphological state, any structural state, and any chemical state, whether as added to or as present in the polymer or composition of matter.

The terms "melt phase," "melt-phase product," and "melt-phase polyethylene terephthalate polyester," etc. are intended to refer to melt-phase reactions and to the products of such reactions. Melt-phase products may be isolated in the form of pellets or chips, or may be fed as a melt directly from the melt-phase finishers into extruders and directed into molds for making shaped articles such as bottle preforms (e.g. "melt to mold" or "melt to preform"). Unless otherwise specified, the melt-phase product may take any shape or form, including amorphous pellets, crystallized pellets, solid stated pellets, preforms, sheets, bottles, tray, jar, and so forth. In one aspect, the melt-phase polyethylene terephthalate polyesters useful according to the invention may be limited to those not having undergone an increase in molecular weight in the solid state, that is, those having substantially all of their increase in molecular weight occurring while in the melt phase. Inherent viscosity is used by those skilled in the art to estimate molecular weight build, so that those polyesters made entirely in the melt phase and without subsequent solid-stating will have an inherent viscosity at the time of use that is not substantially greater than the inherent viscosity achieved during the melt phase polymerization. These polyesters may be described as or considered to be "melt-phase only" polyesters.

The term "melt" in the context of a melt-phase product is a broad umbrella term referring to a stream undergoing reaction at any point in the melt phase for making a polyester polymer, and includes the stream in esterification phase even though the viscosity of this stream is typically not meaningful, and also includes the stream in the polycondensation phase including the prepolymer and finishing phases, between each phase, and up to the point where the melt is solidified. The term "melt" is intended to refer to a polyester product not having undergone an increase in molecular weight in the solid state, although a melt-phase product may, of course, optionally undergo an increase in molecular weight in the solid state, as evidenced, for example, by an increase in inherent viscosity, after which it would no longer be considered a "melt."

The term "alkali metal" refers to any metal in group 1 A of the periodic chart and in particular refers to lithium, sodium, and potassium. The term "alkaline earth metal" refers to any metal in Group IIA of the periodic table, and in particular, Mg, Ca, or Sr. The aluminum and the alkali metal or alkaline earth metal may be provided in a variety of forms that might include, for example, a combination of lithium hydroxide and aluminum isopropoxide, as well as a combination of sodium hydroxide and aluminum acetate.

The intrinsic viscosity is the limiting value at infinite dilution of the specific viscosity of a polymer. It is defined by the following equation:

$$\eta_{int} = \lim_{C \to 0} (\eta_{sp}/C) = \lim_{C \to 0} \ln(\eta_r/C)$$

Where $\eta_{int}$ = Intrinsic viscosity
$\eta_r$ = Relative viscosity = $t_s/t_o$
$\eta_{sp}$ = Specific viscosity = $\eta_r - 1$

Instrument calibration involves replicate testing of a standard reference material and then applying appropriate mathematical equations to produce the "accepted" I.V. values.

$$\text{Calibration Factor} = \frac{\text{Accepted Ih.V. of Reference Material}}{\text{Average of Triplicate Determinations}}$$

$$\text{Corrected Ih.V.} = \text{Calculated Ih.V.} \times \text{Calibration Factor}$$

The intrinsic viscosity (It.V. or $\eta_{int}$) may be estimated using the Billmeyer equation as follows:

$$\eta_{int} = 0.5 [e^{0.5 \times \text{Corrected Ih.V.}} - 1] + (0.75 \times \text{Corrected Ih.V.})$$

Inherent viscosity (I.V.) is calculated from the measured solution viscosity. The following equations describe these solution viscosity measurements:

$$IV = \eta_{inh} = [\ln(t_s/t_o)]/C$$

where $\eta_{inh}$ = Inherent viscosity at 25°C at a polymer concentration of 0.50g/100 mL of 60% phenol and 40% 1,1,2,2-tetrachloroethane
ln = Natural logarithm
$t_s$ = Sample flow time through a capillary tube
$t_o$ = Solvent-blank flow time through a capillary tube
C = Concentration of polymer in grams per 100 mL of solvent (0.50%)

Herein, inherent viscosity (IV) measurements were made under the conditions described above (at 25°C at a polymer concentration of 0.50 g/100 mL of 60% phenol and 40% 1,1,2,2-tetrachloroethane).

L*, a*, and b* color coordinates are measured on transparent injection-molded disks, according to the following method. A Mini-Jector model 55-1 is used to mold a circular disk which has a diameter of 40 mm and a thickness of 2.5 mm. Before molding, the pellets are dried for at least 120 minutes and no more than 150 minutes in a forced air mechanical convection oven set at 170 °C. The Mini-Jector settings are the following: rear heater zone = 275 °C; front two heater zones = 285 °C; cycle time = 32 seconds; and inject timer 30 seconds. The color of the transparent injection-molded disk is measured using a HunterLab UltraScan XE® spectrophotometer. The HunterLab UltraScan XE® spectrophotometer is operated using a D65 illuminant light source with a 10° observation angle and integrating sphere geometry. The HunterLab UltraScan XE® spectrophotometer is zeroed, standardized, UV calibrated, and verified in control. The color measurement is made in the total transition (TTRAN) mode. The L* value indicates the transmission/opacity of the sample. The "a*" value indicates the redness (+)/greenness (-) of the sample. The "b* value indicates the yellowness (+)/blueness (-) of the sample.

Alternatively, color values are measured on crystallized polyester pellets or crystallized polymer ground to a powder passing a 3 mm screen. The polyester pellets or polymer specimens which are ground to a powder have a minimum degree of crystallinity of 15%. The HunterLab UltraScan XE® spectrophotometer is operated using a D65 illuminant light source with a 10° observation angle and integrating sphere geometry. The HunterLab UltraScan XE® spectrophotometer is zeroed, standardized, UV calibrated, and verified in control. The color measurement is made in the reflectance (RSIN) mode. The results are expressed in the CIE 1976 L*, a*, b* (CIELAB) color scale. The "L*" value indicates the lightness/darkness of the sample. The "a*" indicates the redness (+)/greenness (-) of the sample. The "b*" indicates the yellowness (+)/blueness (-) of the sample.

In one aspect, the invention relates to polyester compositions that include a melt-phase polyethylene terephthalate polyester having incorporated therein residues of a monomer having two or more fused aromatic rings, in an amount from about 0.1 mole% to about 10 mole%, based on a total amount of dicarboxylic acid residues in the melt-phase polyethylene terephthalate polyester comprising 100 mole%. Alternatively, the amount of residues of the monomer having two or more fused aromatic rings may be from about 0.1 mole% to about 3 mole%, or from about 0.5 mole% to about 2.5 mole%, in each case based on the total amount of dicarboxylic acid residues in the melt-phase polyethylene terephthalate polyester comprising 100 mole%.

In other aspects, the amount of residues of the monomer having two or more fused aromatic rings may be at least 0.05 mole%, or at least 0.1 mole%, or at least 0.25 mole%. Further, the amount of residues of the monomer having two or more fused aromatic rings may be up to about 3 mole%, or up to 5 mole%, or up to 10 mole%, in each case based on the total amount of dicarboxylic acid residues in the melt-phase polyethylene terephthalate polyester comprising 100 mole%.

According to the invention, the melt-phase polyethylene terephthalate polyester may comprise, for example, residues of terephthalic acid, present in an amount of at least 90 mole%, based on the total amount of dicarboxylic acid residues in the melt-phase polyethylene terephthalate polyester comprising 100 mole%, and residues of ethylene glycol, present in an amount of at least 90 mole%, based on a total amount of diol residues in the melt-phase polyethylene terephthalate polyester comprising 100 mole%. In alternative embodiments, the residues of terephthalic acid may be present in an amount of at least 92 mole%, or at least 95 mole%, in each case based on the total amount of dicarboxylic acid residues in the melt-phase polyethylene terephthalate polyester comprising 100 mole%, and the residues of ethylene glycol may be present in an amount of at least 92 mole%, or at least 95 mole%, in each case based on a total amount of diol residues in the melt-phase polyethylene terephthalate polyester comprising 100 mole%.

The melt-phase polyethylene terephthalate polyesters useful according to the invention include one or more monomers having two or more fused aromatic rings, for example 2,6-naphthalenedicarboxylic acid; dimethyl 2,6-naphthalenedicarboxylate; 9-anthracenecarboxylic acid; 2,6-anthracenedicarboxylic acid; dimethyl-2,6-anthracenedicarboxylate; 1,5-anthracenedicarboxylic acid; dimethyl-1,5-anthracenedicarboxylate; 1,8-anthracenedicarboxylic acid; or dimethyl-1,8-anthracenedicarboxylate. Thus, in one aspect the invention relates to polyester compositions in which the monomer having two or more fused aromatic rings comprises 2,6-naphthalenedicarboxylic acid present in an amount, for example, from about 0.1 mole% to about 3 mole%. Alternatively, the 2,6-naphthalenedicarboxylic acid may be present, for example, in an amount from about 0.5 mole% to about 2.5 mole%, or as disclosed elsewhere herein with respect to the one or more monomers having two or more fused aromatic rings.

The polyester compositions of the invention further comprise aluminum, and optionally an alkali metal or an alkaline earth metal, for example lithium.

The polyester compositions of the invention may further comprise residues of phosphoric acid.

In some aspects of the invention, the polyester compositions may not comprise other metals having catalytic effect, and may, for example, not comprise antimony, or germanium, or titanium. Such compositions and the polyesters in them may therefore be prepared in the absence of antimony, or germanium, or titanium, or mixtures of these metals.

The aluminum of the polyester compositions may be provided in a variety of forms, as described elsewhere herein, and may be provided in various amounts, for example in an amount from about 1 ppm to about 150 ppm aluminum atoms, or from about 3 ppm to about 100 ppm aluminum atoms, or from 5 ppm to 60 ppm aluminum atoms, in each case based on the total weight of the polyester composition.

Similarly the optional alkali metal or alkaline earth metal may be provided in a variety of forms, as described elsewhere herein, and may comprise lithium, for example, present in an amount from about 4 ppm to about 400 ppm lithium atoms, or from 30 ppm to 250 ppm lithium atoms, in each case based on the total weight of the polyester composition.

In another aspect, the aluminum may be present in an amount from about 5 ppm to about 100 ppm aluminum atoms, based on the total weight of the polyester composition; and the alkali metal or alkaline earth metal may comprise lithium present in an amount from about 4 ppm to about 250 ppm lithium atoms, based on the total weight of the polyester composition.

In yet another aspect, the polyester compositions of the invention may further comprise phosphorus, present in an amount from about 10 ppm to about 300 ppm phosphorus atoms, or from 12 ppm to 250 ppm, or from 15 ppm to 200 ppm, in each case based on the total weight of the polyester composition. Alternatively, the amount of phosphorus present may be defined as a molar ratio of phosphorus to the combined total of aluminum and optional alkali metal or alkaline earth metal, and thus may range, for example, from about 0.25 moles of phosphorus per mole of aluminum and optional alkali metal or alkaline earth metal, to about 3 moles of phosphorus per mole of aluminum and optional alkali metal or alkaline earth metal.

The phosphorus may be provided as a phosphorus compound containing one or more phosphorus atoms, and especially phosphate triesters, acidic phosphorus compounds or their ester derivatives, and amine salts of acidic-phosphorus containing compounds.

Specific examples of phosphorus compounds include phosphoric acid, pyrophosphoric acid, phosphorous acid, polyphosphoric acid, carboxyphosphonic acids, alkylphosphonic acids, phosphonic acid derivatives, and each of their acidic salts and acidic esters and derivatives, including acidic phosphate esters such as phosphate mono- and di- esters and non-acidic phosphate esters (e.g. phosphate tri-esters) such as trimethyl phosphate, triethyl phosphate, tributyl phosphate, tributoxyethyl phosphate, tris(2- ethylhexyl) phosphate, oligomeric phosphate tri-esters, trioctyl phosphate, triphenyl phosphate, tritolyl phosphate, (tris)ethylene glycol phosphate, triethyl phosphonoacetate, dimethyl methyl phosphonate, tetraisopropyl methylenediphosphonate, mono-, di-, and tri-esters of phosphoric acid with ethylene glycol, diethylene glycol, or 2-ethylhexanol, or mixtures of each.

In a further aspect, the melt-phase polyethylene terephthalate polyesters of the invention may have an I.V., obtained from a melt-phase polymerization reaction, of at least 0.72 dL/g, or at least 0.75 dL/g, or at least 0.78 dL/g, or at least 0.80 dL/g, or as described elsewhere herein. These polyesters may thereafter undergo a further increase in molecular weight in the solid state, as evidenced by an increase in inherent viscosity, or alternatively, may have substantially all of their increase in molecular weight occur while in the melt phase. Thus, the melt-phase polyethylene terephthalate polyesters of the invention may have an I.V. achieved during melt-phase polymerization of at least 0.72 dL/g, or at least 0.75 dL/g, or at least 0.78 dL/g, or at least 0.80 dL/g, or as described elsewhere herein. The inherent viscosity may thereafter decrease due to subsequent processing, especially if at elevated temperatures, such that a higher inherent viscosity may be desired in order to account for this subsequent loss in molecular weight.

In a further aspect, polyester compositions are provided that include a melt-phase polyethylene terephthalate polyester having incorporated therein residues of 2,6-naphthalenedicarboxylic acid, in an amount from about 0.1 mole% to about 3 mole%, based on a total amount of dicarboxylic acid residues in the melt-phase polyethylene terephthalate polyester comprising 100 mole%; aluminum, present in an amount from about 3 ppm to about 100 ppm aluminum atoms, based on the total weight of the polyester composition; and lithium, present in an amount from about 4 ppm to about 250 ppm lithium atoms, based on the total weight of the polyester composition.

In yet another aspect, articles are provided that include a melt-phase polyethylene terephthalate polyester having incorporated therein residues of 2,6-naphthalenedicarboxylic acid, in an amount from about 0.1 mole% to about 3 mole%, based on a total amount of dicarboxylic acid residues in the melt-phase polyethylene terephthalate polyester comprising 100 mole%; aluminum, present in an amount from about 3 ppm to about 100 ppm aluminum atoms, based on the total weight of the article; and lithium, present in an amount from about from about 4 ppm to about 250 ppm lithium atoms, based on the total weight of the article. These articles may be, for example, in the form of a bottle, a preform, a jar, or a tray.

In yet another aspect, the invention relates to processes for making a melt-phase polyethylene terephthalate polyester, that include the steps of forming a mixture comprising ethylene glycol, at least one acid chosen from terephthalic acid and derivatives of terephthalic acid, and a monomer having two or more fused aromatic rings, wherein the monomer having two or more fused aromatic rings is present in an amount from about 0.1 mole% to about 3 mole%, based on a total amount of dicarboxylic acid residues in the mixture comprising 100 mole%; and reacting the mixture in the presence of aluminum and an alkali metal or an alkaline earth metal to obtain the melt-phase polyethylene terephthalate polyester. Alternatively, the monomer having two or more fused aromatic rings may be present in an amount from about 0.5 mole% to about 2.5 mole%.

In a further aspect, the mixture may comprise terephthalic acid, present in an amount of at least 90 mole%, based on the total amount of dicarboxylic acid residues in the mixture comprising 100 mole%, and the ethylene glycol may be present in the mixture in an amount of at least 90 mole%, based on a total amount of diols in the mixture comprising 100 mole%.

In yet another aspect the monomer having two or more fused aromatic rings provided to the mixture may include one or more of: 2,6-naphthalenedicarboxylic acid; dimethyl 2,6-naphthalenedicarboxylate; 9-anthracenecarboxylic acid; 2,6-anthracenedicarboxylic acid; dimethyl-2,6-anthracenedicarboxylate; 1,5-anthracenedicarboxylic acid; dimethyl-1,5-anthracenedicarboxylate; 1,8-anthracenedicarboxylic acid; or dimethyl-1,8-anthracenedicarboxylate, and may be especially, for example, 2,6-naphthalenedicarboxylic acid, present in the mixture in an amount, for example, from about 0.5 mole% to about 2.5 mole%.

In a further aspect, the alkali metal or alkaline earth metal may comprise lithium, for example, and may not comprise antimony, or germanium. In yet another aspect, the aluminum may be present in the reaction mixture in an amount from about 1 ppm to about 200 ppm aluminum atoms, or from 3 ppm to 100 ppm aluminum atoms, in each case based on the total weight of the melt-phase polyethylene terephthalate polyester obtained.

In yet another aspect, the alkali metal or alkaline earth metal provided to the mixture may comprise lithium, for example in an amount from 6 ppm to 250 ppm lithium atoms, based on the total weight of the melt-phase polyethylene terephthalate polyester obtained.

In yet another aspect, the aluminum may be provided to the mixture in an amount from about 3 ppm to about 100 ppm aluminum atoms, based on the total weight of the melt-phase polyethylene terephthalate polyester obtained;

and the alkali metal or alkaline earth metal may comprise lithium present in an amount from about 4 ppm to about 250 ppm lithium atoms, based on the total weight of the melt-phase polyethylene terephthalate polyester obtained.

In yet another aspect, the processes of the invention include a further step of adding phosphorus to the melt-phase polyethylene terephthalate polyester obtained, in an amount from about 10 ppm to about 300 ppm phosphorus, based on the total weight of the melt-phase polyethylene terephthalate polyester obtained, or as described elsewhere herein.

In a further aspect, the melt-phase polyethylene terephthalate polyester obtained may have an I.V. of at least 0.72 dL/g, or at least 0.78 dL/g, or as further described herein. In yet another aspect, the processes of the invention may exclude a solid state polymerization step, and thus may optionally exclude compositions having had a significant increase in molecular weight in the solid state. In this aspect, the I.V. may be achieved entirely in the melt phase.

We have unexpectedly discovered that in melt-phase processes for making polyethylene terephthalate polyesters, whether homopolymers or copolymers, and especially those carried out in the absence of antimony, for example including aluminum and an alkali metal or an alkaline earth metal as catalysts, or titanium as described and claimed in an application copending herewith, the inclusion of a comonomer containing two or more fused aromatic rings, such as 2,6-naphthalenedicarboxylic acid, significantly improves the thermo-oxidative stability of these PET resins. Specifically, less molecular weight loss during drying in air is observed.

We have found that compositions made using an antimony-free catalyst system are thermo-oxidatively unstable in customer dryers at temperatures routinely employed. This instability causes the polymers to lose molecular weight and develop color when dried at temperatures necessary to ensure reliable processing and defect-free preform manufacture. As shown in the examples, the inclusion of comonomers with two or more fused aromatic rings significantly decreases the amount of molecular weight lost during simulated drying.

We have found that the incorporation of at least one source of aluminum, and optionally at least one source of an alkali metal or an alkaline earth metal, and a comonomer with two or more fused aromatic rings in the comonomer backbone, in a melt-phase process for producing polyethylene terephthalate polyesters, results in a polyester product having improved thermo-oxidative stability. Examples of acceptable comonomers include 2,6-naphthalenedicarboxylic acid, dimethyl 2,6-naphthalenedicarboxylate, 9-anthracenecarboxylic acid, 2,6-anthracenedicarboxylic acid, dimethyl-2,6-anthracenedicarboxylate, 1,5-anthracenedicarboxylic acid, dimethyl-1,5-anthracenedicarboxylate, 1,8-anthracenedicarboxylic acid, dimethyl-1,8-anthracenedicarboxylate, and similar derivatives of anthracene, naphthalene, phenanthrene, and pyrene.

The polyester compositions according to the invention allow drying at standard drying temperatures, while maintaining satisfactory molecular weight.

The melt-phase polyethylene terephthalate polyesters of the invention include at least one melt-phase polyethylene terephthalate polyester. In an embodiment, the melt-phase polyethylene terephthalate polyester is virgin (e.g., non-recycled) polyethylene terephthalate polyester. In an embodiment, the melt-phase polyethylene terephthalate polyester does not comprise any post-consumer recycled polyethylene terephthalate. In an embodiment, the at least one polyethylene terephthalate polyester does not comprise any pre-consumer recycled polyethylene terephthalate.

In one aspect, the melt-phase polyethylene terephthalate polyester comprises:

(a) residues of at least one carboxylic acid component wherein at least 90 mole% of the residues are residues of terephthalic acid based on 100 mole% of the residues of at least one carboxylic acid component, and

(b) residues of at least one hydroxyl component wherein at least 90 mole% of the residues are residues of ethylene glycol, based on 100 mole% of the residues of at least one hydroxyl component. In an embodiment, the melt-phase polyethylene terephthalate polyester further comprises up to 10 mole% of residues chosen from residues of isophthalic acid, residues of diethylene glycol, residues of 1,4-cyclohexanediol (CHDM), and residues of derivatives thereof. Non-limiting exemplary ranges for residues of isophthalic acid are 0.5-5.0 mole% relative to the total diacid components, for residues of diethylene glycol are 0.5-4.0 wt% based on the weight of the polymer, and for residues CHDM are 0.5-4.0 mole % relative to glycol components. In an embodiment, the polyester compositions further comprise residues of phosphoric acid.

In one aspect, the polyester compositions comprise aluminum, and the alkali metal or alkaline earth metal comprises lithium. In another aspect, the amount of aluminum may be from 3 ppm to 100 ppm, based on the total weight of the polyester composition. In yet another aspect, the amount of the at least one alkali metal or alkaline earth metal may be from 3 ppm to 100 ppm, based on the total weight of the polyester composition. In another aspect, the alkali metal or alkaline earth metal comprises an alkali metal, present in the polyester compositions in an amount from 3 ppm to 20 ppm alkali metal, based on the total weight of the polyester compositions.

The aluminum useful in the compositions and processes of the invention may be provided in a variety of forms and amounts. For example, the aluminum will typically be present as an aluminum residue, that is, a moiety remaining in a polymer melt upon addition of aluminum atoms to the melt-phase process for making the polyester polymer, and the oxidation state, morphological state, structural state, or chemical state of the aluminum compound as added or of the residue present in the compositions is not limited. The aluminum residue may be in the same form as the aluminum compound added to the melt-phase reaction, but typically will be altered since the aluminum participates in accelerating the rate of polycondensation.

By the term "aluminum atoms" or "aluminum" is meant the presence of aluminum in the polyester polymer detected through any suitable analytical technique regardless of the oxidation state of the aluminum. Suitable detection methods for the presence of aluminum include inductively coupled plasma optical emission spectroscopy (ICP-OES). The concentration of aluminum is reported as the parts per million of metal atoms based on the weight of the polymer compositions. The term "metal" does not imply a particular oxidation state.

Aluminum may be added to the processes of the invention as a compound or as a metal, so long as the aluminum is ultimately active as a catalyst in the polycondensation phase, either alone or in combination with the alkali metal or alkaline earth metal. Aluminum oxides are not included within the meaning of an aluminum compound or metal because they are insoluble and have little, if any, catalytic activity in the polymer melt. It is desirable to select an aluminum compound which can be dissolved in a diluent or a carrier that is volatile and/or reactive with the polyester forming ingredients. Aluminum compounds can also be added as slurries or suspensions in a liquid that is volatile and/or reactive with the polyester forming ingredients. A mode of addition of aluminum compounds is addition to a catalyst mix tank, which is part of the polyester melt-phase process equipment. The catalyst mix tank may also contain an alkali metal compound or an alkaline earth compound, as well as a suitable solvent, for example ethylene glycol.

Suitable examples of aluminum compounds include the carboxylic acid salts of aluminum such as aluminum acetate, aluminum benzoate, aluminum lactate, aluminum laurate, aluminum stearate, aluminum alcoholates such as aluminum ethylate, aluminum isopropylate, aluminum tri n-butyrate, aluminum tri-tert-butyrate, mono-sec-butoxyaluminum diisopropylate, and aluminum chelates in which the alkoxy group of an aluminum alcoholate is partially or wholly substituted by a chelating agents such as an alkyl acetoacetate or acetylacetone such as ethyl acetoacetate aluminum diisopropylate, aluminum tris(ethyl acetoacetate), alkyl acetoacetate aluminum diisopropylate, aluminum monoacetylacetate bis(ethyl acetoacetate), aluminum tris(acetyl acetate), aluminum acetylacetonate.

The amount of aluminum present according to the invention may be at least 1 ppm, or at least 3 ppm, or at least 5 ppm, or at least 8 ppm, or at least 10 ppm, or at least 20 ppm, or at least 30 ppm, and up to about 150 ppm, or up to about 100 ppm, or up to about 75 ppm, or up to about 60 ppm aluminum atoms, based on the total weight of the polyester composition, or based on the total weight of the reaction mixture, as the case may be. Increasing the alkali or alkaline earth metal to aluminum mole ratio (M:Al) is believed to increase the reaction rate. Therefore, low aluminum loadings may give a reasonable rate with moderate to high M:Al, while giving slow rates at low M:Al mole ratio.

The alkali metals or alkaline earth metals useful in the compositions and processes of the invention may be provided in a variety of forms and amounts, and are typically present as an alkali metal residue or an alkaline earth metal residue, with the alkali metal atoms or alkaline earth metal atoms being present in the polyester polymer in any form or oxidation state. Their oxidation states or ultimate physical, morphological, structural, or chemical states are not limited. The word "alkali metal" or "alkaline earth metal" or "metal" includes the atom in its elemental state or in an oxidation state corresponding to its allowable valences in its Periodic group. Likewise, the chemical state of the alkaline earth metal compound or alkali metal compound upon addition is not limited.

The alkali metals and alkaline earth metals useful according to the invention are those metals in Group IA and Group IIA or the periodic table, including but not limited to Li, Na, K, Rb, Cs, Mg, Ca, Sr, and especially Li, Na or K. If rapid rates and clarity are the primary concern, Li may be preferred. If color is the primary concern, Na may be preferred. The metals may be added to the melt phase as metal compounds (which includes a complex or a salt) having counterions, for example hydroxides, carbonates, and carboxylic acids.

This invention can be further illustrated by the following examples, although it will be understood that these examples are included merely for purposes of illustration and are not intended to limit the scope of the invention unless otherwise specifically indicated.

EXAMPLES

### Examples 1-6

Oligomer synthesis: Polyethylene terephthalate oligomers were prepared from terephthalic acid and virgin ethylene glycol, and in some cases with various amounts of 2,6-naphthalenedicarboxylic acid purchased from Aldrich Chemical Company (Part # 301353 , [1141-38-4]), or with isophthalic acid or cyclohexane dimethanol as described below. An aqueous mixture of tetramethylammonium hydroxide (TMAH) in water was charged to each batch to reduce the amount of diethylene glycol formed during the esterification reaction. The TMAH was purchased from Aldrich Chemical Company (part # 328251, [75-59-2]) and diluted 1 part in 10 parts distilled water prior to use. In every case, all the raw materials were mixed together in a 2 liter polyethylene beaker and then charged into a Parr high pressure reactor. A control oligomer containing two mole percent of isophthalate modification was also prepared from BP-Amoco's isophthalic acid starting material. Another control oligomer was prepared containing Eastman cyclohexane dimethanol starting material.

Typical reactant charges to the esterification reactor are shown in the table below. The "as charged mol ratio" was 1.6 mols of glycol to 1.0 mols of total acids and the expected yield of water was 144 grams. No catalyst was present during the esterification step.

Table 1

| Reactant | Raw materials charged to the esterification reactor: | | | | | |
|---|---|---|---|---|---|---|
|  | Example 1 | Example 2 | Example 3 | Example 4 | Example 5 | Example 6 |
| Terephthalic Acid | 664.6 4g [4.00 moles] | 651.3 5g [3.98 moles] | 664.65g [4.00 moles] | 661.3 5g [3.98 moles] | 651.4 0g [3.91 moles] | 651.3 8g 3.92 moles] |
| Ethylene Glycol | 397.2 8g [6.40 moles] | 397.2 5g [6.40 moles] | 397.22g [6.40 moles] | 397.2 5g [6.40 moles] | 397.2 8g [6.40 moles] | 397.3 2g [6.40 moles] |
| 2,6-Napthalene dicarboxylic acid | 0g | 0g | 0g | 4.32g [0.02 moles] | 8.71g [0.04 moles] | 17.20 g [0.08 moles] |
| Isophthalic Acid | 0g | 13.32 g [0.08 moles] | 0g | 0g | 0g | 0g |
| Cyclohexa nedimethanol | 0g | 0g | 10.43g [0.07 moles] | 0g | 0g | 0g |
| TMAH - H2O solution | 0.5g | 0.5g | 0.6g | 0.5g | 0.4g | 0.7g |

The reactor used to carry out the esterification had a 2 liter volume and was fitted with a heated, packed, column for reaction by-product separation and removal. The packed column was connected to a water cooled condenser which was, in turn, connected to a pressure regulator and house nitrogen source. The flow of nitrogen into the system was controlled by this regulator. The volume of nitrogen to be 'bled' into the system was determined based on the output from a pressure transducer located on the head of the reactor. The reaction vapor output, which was cooled in the condenser section, was collected and its mass was continuously measured to estimate the extent of reaction. The unit had a "propeller" style stirrer to provide agitation.

The reaction conditions were controlled and monitored using a Camile® distributed data acquisition and control system. The target reaction parameters were as shown in Table 2 below.

Table 2

| Stage | Duration (minutes) | Reactor Temperature (° C) | Reactor Pressure (psig) | Stir Rate (rpm shaft) | Column Temperature (° C) |
|---|---|---|---|---|---|
| 1 | 5 | 25 | 40 | 180 | 25 |
| 2 | 60 | 245 | 40 | 180 | 25 |
| 3 | 5 | 245 | 40 | 180 | 150 |
| 4 | 200 | 245 | 40 | 180 | 150 |
| 5 | 25 | 245 | 0 | 0 | 25 |
| 6 | 1 | 25 | 0 | 0 | 0 |

After completion of the reaction sequence, the product was removed from the Parr reactor via a ram-seal valve fitted to the reactor's bottom section. A small portion of the reaction mixture was collected in a three-inch diameter, one-half inch deep aluminum pan for color evaluation. The remaining oligomer was drained into a stainless steel pan and allowed to solidify before being immersed in liquid nitrogen. The cold oligomer was pulverized using a hammer to produce a coarse powder suitable for polymerization.

The product oligomer was analyzed by proton NMR to determine composition, molar ratio of EG to total acids, degree of polymerization, and diethylene glycol content. Color was measured on the cooled disk of oligomer collected in the aluminum pan as described above. The measurement was made using a Hunter Ultrascan XE instrument.

Polymer synthesis (**Examples 1-6**): Samples of the granular oligomer from each Parr run were charged to a series of 500-ml heavy walled, round-bottom flasks for polymerization. A catalyst loading of nine parts per million of lithium and twelve parts per million of aluminum based on the expected yield of one hundred grams of polymer product was employed. The lithium and aluminum were introduced into the oligomer as a solution of lithium hydroxide (Aldrich 402974, [1310-66-3]) and aluminum isopropoylate (Aldrich 220418, [555-31-7]) in diethylene glycol. The addition of the catalyst mix was done using a syringe.

A stainless steel stirrer (2" diameter paddle) was next inserted into the flask and then each flask was fitted with a polymer adapter head. This head included a nipple for the attachment of a nitrogen purge line, a septum port for injection of additives, a smooth bore tubular section for the stirring shaft and two standard taper 24/40 male joints; one for insertion into the flask's female joint and the second, which is oriented at a 45° angle to the first, was connected to a section of glass tubing terminating at a vacuum condenser system. A Teflon tubular bushing was inserted into the smooth bore section of the adapter. The stainless steel stirring shaft was passed through the inner diameter of this bushing and a section of rubber hose was fitted around the stirring shaft and over the outside diameter of the glass tubing. This assembly provides a low friction, vacuum tight seal between the stirring shaft and the adapter head of the reaction flask. The assembled apparatus was clamped into a polymerization "rig", and the stirring shaft connected to a 1/8 horsepower stirring motor. The polymerization rig included a molten metal bath which could be raised to provide heat input to the flask. The stirring motor could also be raised or lowered to ensure that the stirrer's blade was fully immersed in the molten oligomer/polymer as the reaction was carried out.

Typical melt-phase polymerization reaction conditions are as shown in Table 3. As with the esterification sequence reaction, parameters were monitored and controlled using a Camile® system.

**Table 3**

| Stage Number | Duration (minutes) | Temperature (° C) | System pressure (mm Hg) | Stirring rate (rpm shaft) |
|---|---|---|---|---|
| 1 | 0.1 | 275 | 760 | 0 |
| 2 | 10 | 275 | 760 | 150 |
| 3 | 2 | 275 | 140 | 300 |
| 4 | 1 | 275 | 141 | 300 |
| 5 | 10 | 275 | 51 | 300 |
| 6 | 5 | 275 | 51 | 300 |
| 7 | 2 | 275 | 140 | 300 |
| 8 | 2 | 275 | 140 | 300 |
| 9 | 2 | 275 | 4.5 | 300 |
| 10 | 20 | 275 | 4.5 | 300 |
| 11 | 10 | 275 | 0.5 | 30 |
| 12 | 180 | 275 | 0.5 | 30 |
| 13 | 0.1 | 275 | 0.5 | 30 |
| 14 | 1 | 275 | 600 | 30 |
| 15 | 1 | 275 | 600 | 30 |
| 16 | 1 | 275 | 600 | 30 |
| 17 | 1 | 275 | 600 | 0 |

At the end of the reaction sequence the metal bath was lowered and the polymer mass was allowed to cool. After ten to fifteen minutes the polymer had solidified and the heating bath was raised to re-melt the polymer and permit it to be pulled free of the flask walls. After cooling for an additional fifteen minutes the flask was broken and the solid polymer mass was immersed into liquid nitrogen. The cold polymer mass was removed from the stirring rod using a hydraulic ram fitted with a chisel attachment. The collected "lumps" of polymer were cooled again in liquid nitrogen and finally ground in a Wiley mill. The mill was fitted with a screen having 3-mm diameter holes. The resulting coarsely ground polymer was collected and submitted for various analytical tests.

**Examples 7 and 8**

Resin blending (Examples 7 and 8): Resins were blended using a Sterling extruder with a 1.5 inch diameter general purpose screw turned at 100 rpm. Zone 1 of the extruder was set at 260°C. Zones 2 and 3 were set at 280°C. The die was 260°C. The polyethylene naphthenate polymer used for blending, which contained 8 mole percent terephthalic acid moieties based on total diacid, was dried at 160°C in air for 18 hours prior to extrusion and the polyethylene terephthalate sample, which contained 9 ppm Li and 12 ppm A1 as catalyst residues, was dried at 150°C in air for 8 hours prior to extrusion. Sample 7 was simply the extruded polyethylene terephthalate control. Sample 8 was a blend of 29.70 pounds of the polyethylene terephthalate resin with 0.30 pounds of the slightly modified polyethylene naphthanate resin which produced a polymer that contained 1 mole percent 2,6-naphthalene dicarboxylic acid monomer based on total diacid monomer content. Examples 7 and 8 were in the form of cylindrical pellets.

Themo-oxidative stability (TOS) testing: Examples 1-8 were evaluated for thermo-oxidative stability by passing dry, heated air through the PET particles at 12 scfh and 192°C. The laboratory apparatus consisted of a glass jacketed filter frit with the sample placed above the frit. Dry air was pushed into the sample from below after passing through a glass coil and being heated by indirect contact with refluxing 1-octanol. Sample temperature was measured by a thermocouple placed directly into the sample. Samples were removed at t = 1, 2, 4, 6, 8, and 24 hours and analyzed for inherent viscosity as already described above

**Table 4.** TOS testing of samples 1-6

| Example | Compositional Description (as charged to the esterification reactor) | I.V after heating in air stream for | | | | | | | Total I.V.loss |
|---|---|---|---|---|---|---|---|---|---|
| | | 0 hours | 1 hour | 2 hours | 4 hours | 6 hours | 8 hours | 24 hours | |
| 1 | 100 mole % terephthalate, 100 mole % ethylene glycol | 0.665 | 0.639 | 0.636 | 0.622 | 0.604 | 0.582 | 0.516 | 0.149 |
| 2 | 98 mole % terephthalate, 2 mole % isophthalate, 100 mole % ethylene glycol | 0.713 | 0.684 | 0.673 | 0.618 | 0.572 | 0.564 | 0.497 | 0.216 |
| 3 | 100 mole % terephthalate, 98.9 mole % ethylene glycol, 1.1 mole % 2,4-cyclohexanedimethanol | 0.777 | 0.684 | 0.628 | 0.582 | 0.541 | 0.529 | 0.481 | 0.296 |
| 4 | 99.5 mole % terephthalate, 0.5 mole % naphthalate, 100 mole % ethylene glycol | 0.741 | 0.755 | 0.735 | 0.713 | 0.684 | 0.668 | 0.587 | 0.154 |
| 5 | 99.0 mole % terephthalate, 1.0 mole % naphthalate, 100 mole % ethylene glycol | 0.741 | 0.725 | 0.719 | 0.694 | 0.676 | 0.660 | 0.608 | 0.134 |
| 6 | 98.0 mole % terephthalate, 2.0 mole % naphthalate, 100 mole % ethylene glycol | 0.818 | 1.215 | 0.805 | 0.798 | 0.794 | 0.782 | 0.745 | 0.073 |

**Table 5.** TOD testing of samples 7 and 8

| Sample | | Description | I.V. after heating in air stream for | | | | | | | Total IV loss |
|---|---|---|---|---|---|---|---|---|---|---|
| | | | 0 hours | 1 hour | 2 hours | 4 hours | 6 hours | 8 hours | 24 hours | |
| 7 | | Control | 0.752 | 0.732 | 0.716 | 0.669 | 0.664 | 0.634 | 0.590 | 0.162 |
| 8 | | 1 mole % Naphthalene moiety | 0.735 | 0.724 | 0.718 | 0.698 | 0.693 | 0.691 | 0.675 | 0.060 |

The results in Tables 4 & 5 show that the inclusion of 2,6-naphthalenedicarboxylic acid moiety in Li/Al catalyzed PET substantially increased the thermo-oxidative stability of the resin. Specifically, less molecular weight loss, and thus less IV break, is observed versus a number of controls.

**Claims**

1. A polyester composition comprising:

a melt-phase polyethylene terephthalate polyester having incorporated therein residues of a monomer having two or more fused aromatic rings, in an amount from about 0.1 mole% to about 3 mole%, based on a total amount of dicarboxylic acid residues in the melt-phase polyethylene terephthalate polyester comprising 100 mole%;
aluminum; and
optionally, an alkali metal or an alkaline earth metal.

2. The polyester polymer according to claim 1, wherein the melt-phase polyethylene terephthalate polyester comprises:

(a) residues of terephthalic acid, present in an amount of at least 90 mole%, based on the total amount of dicarboxylic acid residues in the melt-phase polyethylene terephthalate polyester comprising 100 mole%, and
(b) residues of ethylene glycol, present in an amount of at least 90 mole%, based on a total amount of diol residues in the melt-phase polyethylene terephthalate polyester comprising 100 mole%.

3. The polyester composition according to claim 1, wherein the monomer having two or more fused aromatic rings comprises one or more of: 2,6-naphthalenedicarboxylic acid; dimethyl 2,6-naphthalenedicarboxylate; 9-anthracenecarboxylic acid; 2,6-anthracenedicarboxylic acid; dimethyl-2,6-anthracenedicarboxylate; 1,5-anthracenedicarboxylic acid; dimethyl-1,5-anthracenedicarboxylate; 1,8-anthracenedicarboxylic acid; or dimethyl-1,8-anthracenedicarboxylate.

4. The polyester composition according to claim 1, wherein the monomer having two or more fused aromatic rings is 2,6-naphthalenedicarboxylic acid.

5. The polyester composition according to claim 1, wherein the alkali metal or alkaline earth metal is present and comprises lithium.

6. The polyester composition according to claim 1, wherein the polyester composition further comprises residues of phosphoric acid.

7. The polyester composition according to claim 1, wherein the aluminum is present in an amount from about 3 ppm to about 100 ppm aluminum atoms, based on the total weight of the polyester composition.

8. The polyester composition according to claim 1, wherein the alkali metal or alkaline earth metal is present and comprises lithium, present in an amount from 30 ppm to 250 ppm lithium atoms, based on the total weight of the polyester composition.

9. The polyester composition according to claim 1, wherein the aluminum is present in an amount from about 3 ppm to about 100 ppm aluminum atoms, based on the total weight of the polyester composition; and the alkali metal or alkaline earth metal is present and comprises lithium present in an amount from about from about 4 ppm to about 250 ppm lithium atoms, based on the total weight of the polyester composition.

10. The polyester composition according to claim 1, wherein the melt-phase polyethylene terephthalate polyester has an I.V., obtained from a melt-phase polymerization reaction, of at least 0.72 dL/g.

11. A polyester composition comprising:

a melt-phase polyethylene terephthalate polyester having incorporated therein residues of 2,6-naphthalenedicarboxylic acid, in an amount from about 0.1 mole% to about 3 mole%, based on a total amount of dicarboxylic acid residues in the melt-phase polyethylene terephthalate polyester comprising 100 mole%;
aluminum present in an amount from about 3 ppm to about 100 ppm aluminum atoms, based on the total weight of the polyester composition; and
lithium present in an amount from about from about 4 ppm to about 250 ppm lithium atoms, based on the total weight of the polyester composition.

12. An article comprising:

a melt-phase polyethylene terephthalate polyester having incorporated therein residues of 2,6-naphthalenedicarboxylic acid, in an amount from about 0.1 mole% to about 3 mole%, based on a total amount of dicarboxylic acid residues in the melt-phase polyethylene terephthalate polyester comprising 100 mole%;
aluminum present in an amount from about 3 ppm to about 100 ppm aluminum atoms, based on the total weight of the article; and
lithium present in an amount from about from about 4 ppm to about 250 ppm lithium atoms, based on the total weight of the article.

13. A process for making a melt-phase polyethylene terephthalate polyester, comprising:

forming a mixture comprising ethylene glycol, at least one acid chosen from terephthalic acid and derivatives of terephthalic acid, and a monomer having two or more fused aromatic rings, wherein the monomer having two or more fused aromatic rings is present in an amount from about 0.1 mole% to about 3 mole%, based on a total amount of dicarboxylic acid residues in the mixture comprising 100 mole%; and
reacting the mixture in the presence of aluminum, and optionally an alkali metal or an alkaline earth metal, to obtain the melt-phase polyethylene terephthalate polyester.

14. The process according to claim 13, wherein the monomer having two or more fused aromatic rings comprises 2,6-naphthalenedicarboxylic acid, present in an amount from about 0.5 mole% to about 2.5 mole%.

15. The process according to claim 13, wherein the alkali metal or alkaline earth metal is present and comprises lithium.

16. The process according to claim 13, wherein the aluminum atoms are present in an amount from about 3 ppm to about 100 ppm, based on the total weight of the melt-phase polyethylene terephthalate polyester obtained; and wherein the alkali metal or alkaline earth metal is present and comprises lithium present in an amount from about 4 ppm to about 250 ppm lithium atoms, based on the total weight of the melt-phase polyethylene terephthalate polyester obtained.

17. The process according to claim 13, comprising a further step of:

adding phosphorus to the melt-phase polyethylene terephthalate polyester obtained, in an amount from about 10 ppm to about 300 ppm phosphorus, based on the total weight of the melt-phase polyethylene terephthalate polyester obtained.

18. The process according to claim 13, wherein the melt-phase polyethylene terephthalate polyester obtained has an I.V. of at least 0.72 dL/g achieved in the melt phase.

19. The process according to claim 13, wherein the process does not comprise solid state polymerization.

**Patentansprüche**

1.  Polyesterzusammensetzung umfassend:

    einen Polyethylenterephthalat-Polyester aus der Schmelzphase, der im Polyester eingebunden aufweist: Reste eines Monomers mit zwei oder mehr kondensierten aromatischen Ringen in einer Menge von ungefähr 0,1 Mol-% bis ungefähr 3 Mol-%, bezogen auf die Gesamtmenge an Resten der Dicarbonsäure im Polyethylenterephthalat-Polyester aus der Schmelzphase, welche 100 Mol-% umfasst;
    Aluminium; und
    optional, ein Alkalimetall oder ein Erdalkalimetall.

2.  Polyesterpolymer nach Anspruch 1, wobei der Polyethylenterephthalat-Polyester aus der Schmelzphase umfasst:

    (a) Reste der Terephthalsäure, welche in einer Menge von mindestens 90 Mol-% vorhanden sind, bezogen auf die Gesamtmenge der Reste der Dicarbonsäure im Polyethylenterephthalat-Polyester aus der Schmelzphase, welche 100 Mol-% umfasst, und
    (b) Reste von Ethylenglykol, welche in einer Menge von mindestens 90 Mol-% vorhanden sind, bezogen auf eine Gesamtmenge an Diolresten im Polyethylenterephthalat-Polyester aus der Schmelzphase, welche 100 Mol% umfasst.

3.  Polyesterzusammensetzung nach Anspruch 1, wobei das Monomer, welches zwei oder mehr kondensierte aromatische Ringe aufweist, eines oder mehrere der Folgenden aufweist: 2,6-Naphthalindicarbonsäure; Dimethyl-2,6-naphthalindicarboxylat; 9-Anthracencarbonsäure; 2,6-Anthracendicarbonsäure; Dimethyl-2,6-anthracendicarboxy-lat; 1,5-Anthracendicarbonsäure; Dimethly-1,5-anthracendicarboxylat; 1,8-Anthracendicarbonsäure; oder Dimethyl-1,8-anthracen-dicarboxylat.

4.  Polyesterzusammensetzung nach Anspruch 1, wobei das Monomer, welches zwei oder mehr kondensierte aromatische Ringe aufweist, 2,6-Naphthalindicarbonsäure ist.

5.  Polyesterzusammensetzung nach Anspruch 1, wobei das Alkalimetall oder das Erdalkalimetall vorhanden ist und Lithium umfasst.

6.  Polyesterzusammensetzung nach Anspruch 1, wobei die Polyesterzusammensetzung weiter Reste der Phosphorsäure umfasst.

7.  Polyesterzusammensetzung nach Anspruch 1, wobei das Aluminium in einer Menge von ungefähr 3 ppm bis ungefähr 100 ppm Aluminiumatomen vorhanden ist, bezogen auf das Gesamtgewicht der Polyesterzusammensetzung.

8.  Polyesterzusammensetzung nach Anspruch 1, wobei das Alkalimetall oder das Erdalkalimetall vorhanden ist und Lithium umfasst, welches in einer Menge von 30 ppm bis 250 ppm Lithiumatomen vorhanden ist, bezogen auf das Gesamtgewicht der Polyesterzusammensetzung.

9.  Polyesterpolymer nach Anspruch 1, wobei das Aluminium in einer Menge von ungefähr 3 ppm bis ungefähr 100 ppm Aluminiumatomen vorhanden ist, bezogen auf das Gesamtgewicht der Polyesterzusammensetzung; und das Alkalimetall oder das Erdalkalimetall vorhanden ist und Lithium umfasst, welches in einer Menge von ungefähr 4 ppm bis ungefähr 250 ppm Lithiumatomen vorhanden ist, bezogen auf das Gesamtgewicht der Polyesterzusammensetzung.

10. Polyesterzusammensetzung nach Anspruch 1, wobei der Polyethylenterephthalat-Polyester aus der Schmelzphase, der aus einer Polymerisationsreaktion in der Schmelzphase erhalten wurde, eine I.V. von mindestens 0,72 dl/g ausweist.

11. Polyesterzusammensetzung umfassend:

    einen Polyethylenterephthalat-Polyester aus der Schmelzphase, der darin eingebunden aufweist: Reste der 2,6-Naphthalindicarbonsäure in einer Menge von ungefähr 0,1 Mol-% bis ungefähr 3 Mol-%, bezogen auf eine Gesamtmenge an Resten der Dicarbonsäure im Polyethylenterephthalat-Polyester aus der Schmelzphase, welche 100 Mol-% umfasst;

Aluminium, welches in einer Menge von ungefähr 3 ppm bis ungefähr 100 ppm Aluminiumatomen vorhanden ist, bezogen auf das Gesamtgewicht der Polyesterzusammensetzung; und
Lithium, welches in einer Menge von ungefähr 4 ppm bis ungefähr 250 ppm Lithiumatomen vorhanden ist, bezogen auf das Gesamtgewicht der Polyesterzusammensetzung.

12. Gegenstand umfassend:

einen Polyethylenterephthalat-Polyester aus der Schmelzphase, der darin eingebunden aufweist: Reste der 2,6-Naphthalindicarbonsäure in einer Menge von ungefähr 0,1 Mol-% bis ungefähr 3 Mol-%, bezogen auf eine Gesamtmenge an Resten der Dicarbonsäure im Polyethylenterephthalat-Polyester aus der Schmelzphase, welche 100 Mol-% umfasst;
Aluminium, welches in einer Menge von ungefähr 3 ppm bis ungefähr 100 ppm Aluminiumatomen vorhanden ist, bezogen auf das Gesamtgewicht des Gegenstands; und
Lithium, welches in einer Menge von ungefähr 4 ppm bis ungefähr 250 ppm Lithiumatomen vorhanden ist, bezogen auf das Gesamtgewicht des Gegenstands.

13. Verfahren zur Herstellung eines Polyethylenterephthalat-Polyesters aus der Schmelzphase umfassend:

Bilden eines Gemischs, welches Ethylenglykol, mindestens eine Säure ausgewählt aus Terephthalsäure und Derivaten der Terephthalatsäure, und ein Monomer mit zwei oder mehr kondensierten aromatischen Ringen umfasst, wobei das Monomer, welches zwei oder mehr kondensierte aromatische Ringe aufweist, in einer Menge von ungefähr 0,1 Mol-% bis ungefähr 3 Mol-% vorhanden ist, bezogen auf eine Gesamtmenge der Reste der Dicarbonsäure im Gemisch, welche 100 Mol-% umfasst; und
Reagieren des Gemischs in Anwesenheit von Aluminium und optional eines Alkalimetalls oder eines Erdalkalimetalls, um den Polyethylenterephthalat-Polyester aus der Schmelzphase zu erhalten.

14. Verfahren nach Anspruch 13, wobei das Monomer, welches zwei oder mehr kondensierte aromatische Ringe aufweist 2,6-Naphthalindicaronsäure umfasst, die in einer Menge von ungefähr 0,5 Mol-% bis ungefähr 2,5 Mol-% vorhanden ist.

15. Verfahren nach Anspruch 13, wobei das Alkalimetall oder das Erdalkalimetall vorhanden ist und Lithium umfasst.

16. Verfahren nach Anspruch 13, wobei die Aluminiumatome in einer Menge von ungefähr 3 ppm bis ungefähr 100 ppm vorhanden sind, bezogen auf das Gesamtgewicht des erhaltenen Polyethylenterephthalat-Polyesters aus der Schmelzphase; und wobei das Alkalimetall oder das Erdalkalimetall vorhanden ist und Lithium umfasst, welches in einer Menge von ungefähr 4 ppm bis ungefähr 250 ppm Lithiumatomen vorhanden ist, bezogen auf das Gesamtgewicht des Polyethylenterephthalat-Polyesters aus der Schmelzphase.

17. Verfahren nach Anspruch 13, umfassend folgenden weiteren Schritt:

Hinzufügen von Phosphor in einer Menge von ungefähr 10 ppm bis ungefähr 300 ppm Phosphor zum Polyethylenterephthalat-Polyester aus der Schmelzphase, bezogen auf das Gesamtgewicht des Polyethylenterephthalat-Polyesters, welcher aus der Schmelzphase erhalten wurde.

18. Verfahren nach Anspruch 13, wobei der Polyethylenterephthalat-Polyester, der aus der Schmelzphase erhalten wurde, eine I.V. von mindestens 0,72 dl/g aufweist, die in der Schmelzphase erreicht wurde.

19. Verfahren nach Anspruch 13, wobei das Verfahren keine Polymerisation im Festzustand umfasst.

## Revendications

1. Composition de polyester comprenant :

un polyester de type polyéthylène téréphtalate en phase fondue dans lequel sont incorporés des résidus d'un monomère ayant deux ou plusieurs cycles aromatiques condensés, en une quantité d'environ 0,1 mol% à environ 3 mol%, sur la base d'une quantité totale de résidus d'acide dicarboxylique dans le polyester de type polyéthylène téréphtalate en phase fondue comprenant 100 mol% ;

de l'aluminium ; et

éventuellement, un métal alcalin ou un métal alcalino-terreux.

**2.** Polymère de type polyester selon la revendication 1, où le polyester de type polyéthylène téréphtalate en phase fondue comprend :

(a) des résidus d'acide téréphtalique, présents en une quantité d'au moins 90 mol%, sur la base de la quantité totale de résidus d'acide dicarboxylique dans le polyester de type polyéthylène téréphtalate en phase fondue comprenant 100 mol%, et

(b) des résidus d'éthylèneglycol, présents en une quantité d'au moins 90 mol%, sur la base d'une quantité totale de résidus de diol dans le polyester de type polyéthylène téréphtalate en phase fondue comprenant 100 mol%.

**3.** Composition de polyester selon la revendication 1, où le monomère ayant deux ou plusieurs cycles aromatiques condensés comprend un ou plusieurs de : l'acide 2,6-naphtalènedicarboxylique ; le 2,6-naphtalènedicarboxylate de diméthyle ; l'acide 9-anthracènecarboxylique ; l'acide 2,6-anthracènedicarboxylique ; le 2,6-anthracènedicarboxylate de diméthyle ; l'acide 1,5-anthracènedicarboxylique ; le 1,5-anthracènedicarboxylate de diméthyle ; l'acide 1,8-anthracènedicarboxylique ; ou le 1,8-anthracènedicarboxylate de diméthyle.

**4.** Composition de polyester selon la revendication 1, où le monomère ayant deux ou plusieurs cycles aromatiques condensés est l'acide 2,6-naphtalènedicarboxylique.

**5.** Composition de polyester selon la revendication 1, où le métal alcalin ou le métal alcalino-terreux est présent et comprend du lithium.

**6.** Composition de polyester selon la revendication 1, où la composition de polyester comprend en outre des résidus d'acide phosphorique.

**7.** Composition de polyester selon la revendication 1, où l'aluminium est présent en une quantité d'environ 3 ppm à environ 100 ppm d'atomes d'aluminium, sur la base du poids total de la composition de polyester.

**8.** Composition de polyester selon la revendication 1, où le métal alcalin ou le métal alcalino-terreux est présent et comprend du lithium, présent en une quantité de 30 ppm à 250 ppm d'atomes de lithium, sur la base du poids total de la composition de polyester.

**9.** Composition de polyester selon la revendication 1, où l'aluminium est présent en une quantité d'environ 3 ppm à environ 100 ppm d'atomes d'aluminium, sur la base du poids total de la composition de polyester ; et le métal alcalin ou le métal alcalino-terreux est présent et comprend du lithium présent en une quantité d'environ 4 ppm à environ 250 ppm d'atomes de lithium, sur la base du poids total de la composition de polyester.

**10.** Composition de polyester selon la revendication 1, où le polyester de type polyéthylène téréphtalate en phase fondue a une V.I., obtenue à partir d'une réaction de polymérisation en phase fondue, d'au moins 0,72 dL/g.

**11.** Composition de polyester comprenant :

un polyester de type polyéthylène téréphtalate en phase fondue dans lequel sont incorporés des résidus d'acide 2,6-naphtalènedicarboxylique, en une quantité d'environ 0,1 mol% à environ 3 mol%, sur la base d'une quantité totale de résidus d'acide dicarboxylique dans le polyester de type polyéthylène téréphtalate en phase fondue comprenant 100 mol% ;

de l'aluminium présent en une quantité d'environ 3 ppm à environ 100 ppm d'atomes d'aluminium, sur la base du poids total de la composition de polyester ; et

du lithium présent en une quantité d'environ 4 ppm à environ 250 ppm d'atomes de lithium, sur la base du poids total de la composition de polyester.

**12.** Article comprenant :

un polyester de type polyéthylène téréphtalate en phase fondue dans lequel sont incorporés des résidus d'acide 2,6-naphtalènedicarboxylique, en une quantité d'environ 0,1 mol% à environ 3 mol%, sur la base d'une quantité totale de résidus d'acide dicarboxylique dans le polyester de type polyéthylène téréphtalate en phase fondue comprenant 100 mol% ;
de l'aluminium présent en une quantité d'environ 3 ppm à environ 100 ppm d'atomes d'aluminium, sur la base du poids total de l'article ; et
du lithium présent en une quantité d'environ 4 ppm à environ 250 ppm d'atomes de lithium, sur la base du poids total de l'article.

13. Procédé pour produire un polyester de type polyéthylène téréphtalate en phase fondue comprenant :

la formation d'un mélange comprenant de l'éthylèneglycol, au moins un acide choisi parmi l'acide téréphtalique et les dérivés de l'acide téréphtalique, et un monomère ayant deux ou plusieurs cycles aromatiques condensés, où le monomère ayant deux ou plusieurs cycles aromatiques condensés est présent en une quantité d'environ 0,1 mol% à environ 3 mol%, sur la base d'une quantité totale de résidus d'acide dicarboxylique dans le mélange comprenant 100 mol% ; et
la réaction du mélange en présence d'aluminium, et éventuellement d'un métal alcalin ou d'un métal alcalino-terreux, pour obtenir le polyester de type polyéthylène téréphtalate en phase fondue.

14. Procédé selon la revendication 13, où le monomère ayant deux ou plusieurs cycles aromatiques condensés comprend de l'acide 2,6-naphtalènedicarboxylique, présent en une quantité d'environ 0,5 mol% à environ 2,5 mol%.

15. Procédé selon la revendication 13, où le métal alcalin ou le métal alcalino-terreux est présent et comprend du lithium.

16. Procédé selon la revendication 13, où les atomes d'aluminium sont présents en une quantité d'environ 3 ppm à environ 100 ppm, sur la base du poids total du polyester de type polyéthylène téréphtalate en phase fondue obtenu ; et où le métal alcalin ou le métal alcalino-terreux est présent et comprend du lithium présent en une quantité d'environ 4 ppm à environ 250 ppm d'atomes de lithium, sur la base du poids total du polyester de type polyéthylène téréphtalate en phase fondue obtenu.

17. Procédé selon la revendication 13, comprenant une étape supplémentaire de :

addition de phosphore au polyester de type polyéthylène téréphtalate en phase fondue obtenu, en une quantité d'environ 10 ppm à environ 300 ppm de phosphore, sur la base du poids total du polyester de type polyéthylène téréphtalate en phase fondue obtenu.

18. Procédé selon la revendication 13, où le polyester de type polyéthylène téréphtalate en phase fondue obtenu a une V.I. d'au moins 0,72 dL/g obtenue dans la phase fondue.

19. Procédé selon la revendication 13, où le procédé ne comprend pas de polymérisation à l'état solide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61098060 A